# EUROPÄISCHE PATENTSCHRIFT

(11) **EP 1 476 275 B1**
(45) Veröffentlichungstag und Bekanntmachung des Hinweises auf die Patenterteilung: **02.11.2005**
(21) Anmeldenummer: 03732413.4
(22) Anmeldetag: 19.05.2003
(51) Int. Cl.: B23Q 11/10, B23Q 11/08

(54) **VORRICHTUNG ZUR AUFNAHME UND TRENNUNG VON AN WERKZEUGMASCHINEN ANFALLENDEN SPAENEN UND KUEHLFLUESSIGKEIT (UEBERLAUF)**
DEVICE FOR RECEIVING AND SEPARATING CHIPS CREATED BY MACHINE-TOOLS AND COOLANT (OVERFLOW)
DISPOSITIF DE RECEPTION ET SEPARATION DE COPEAUX ET DE LIQUIDE TOMBANT DE MACHINES-OUTILS (DEBORDEMENT)

(30) Priorität: 24.05.2002 DE 10223291
(43) Veröffentlichungstag der Anmeldung: 17.11.2004
(73) Patentinhaber: Mayfran International B.V., 6370 AA Landgraaf (NL)
(72) Erfinder: ACKERMANNS, Leo, J., P., NL-6305 AJ Schin op Geul (NL); KROONEN, Wiel, E., H., NL-6351 AT Bocholtz (NL); VAN LOO, Joseph, H., NL-6432 DD Hoensbroek (NL)
(74) Vertreter: König, Werner
(86) Internationale Anmeldenummer: PCT/EP2003/005243
(87) Internationale Veröffentlichungsnummer: WO 2003/099515

(56) Entgegenhaltungen:
- EP-A- 1 053 825
- EP-A- 1 177 854
- DE-U- 29 609 685

## Beschreibung

Die Erfindung betrifft eine Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden, mit einem Aufnahmetank zur Aufnahme der Späne und der Kühlflüssigkeit, einem sich an den Aufnahmetank anschließenden ansteigenden Führungsabschnitt, einem sich an den Führungsabschnitt anschließenden erhöhten Abgabeabschnitt, einem kettenartigen geschlossenen Transportelement, welches zumindest in dem die Späne und die Kühlflüssigkeit aufnehmenden Bereich sowie in dem Abgabeabschnitt über Umlenkelemente geführt ist, von denen mindestens eines mit einem Drehantrieb gekoppelt ist, und einer drehbar gelagerten Filtertrommel, welche mit dem Transportelement in Antriebsverbindung steht.

Bei dem Transport von Spänen und Kühlflüssigkeit sind Verstopfungen der Transportwege nicht völlig auszuschließen. Zudem kann der Anfall der Späne und der Kühlflüssigkeit zeitlich sehr ungleich verteilt erfolgen. Daraus wiederum kann sich insgesamt ein Stau der Kühlflüssigkeit in der Vorrichtung und damit auch ein Anstieg der Flüssigkeit ergeben, der im ungünstigsten Fall ein Überlaufen der ungereinigten Kühlflüssigkeit über den oberen Rand des Aufnahmetanks zur Folge haben kann. Ein solches Überlaufen kann dann in sauber zu haltende Bereiche und in Behälter hinein erfolgen, die schon gereinigte Kühlflüssigkeit enthalten.

Die Aufgabe der Erfindung besteht nun darin, im Falle eines solchen Überlaufs die Verschmutzung von rein zu haltenden Bereichen sowie von bereits gereinigtem Kühlmittel enthaltenden Tanks zu verhindern und darüber hinaus dem Bedienungspersonal optisch erkennbar die Überlaufsituation kenntlich zu machen.

Diese Aufgabe wird von einer Vorrichtung der eingangs erwähnten Art erfindungsgemäß dadurch gelöst, dass außenseitig an der Wand des Aufnahmetanks Bügel dichtend festgelegt sind, die an ihren vorstehenden Enden abwärts gerichtet in eine Überlaufrinne hineinreichen; dass die Überlaufrinne auf einem Niveau unterhalb der Oberkante des Aufnahmetanks um die Vorrichtung herum geführt und an den Bügeln lösbar gehalten ist, dass die Überlaufrinne darunter befindliche Tanks mit gefilterter Kühlflüssigkeit dichtend abdeckt, dass die dem Aufnahmetank benachbarte Innenkante der Überlaufrinne auf einem höheren Niveau liegt als die vom Aufnahmetank entfernt liegende Außenkante der Überlaufrinne, und dass im Bodenbereich der Überlaufrinne mindestens eine Ablasseinrichtung vorgesehen ist.

Die Überlaufrinne hat ein Speichervolumen, das überlaufende verschmutzte Kühlflüssigkeit noch eine Zeit lang aufnehmen kann. Reicht dieses Speichervolumen nicht aus, so erfolgt ein Überlauf am äußeren Rand der Rinne. Die unterhalb der Rinne befindliche gereinigte Kühlflüssigkeit wird vor erneuter Verschmutzung geschützt.

Gemäß einem weiteren Vorschlag der Erfindung kann vorgesehen sein, dass die Überlaufrinne U-förmig ausgebildet ist.

Gemäß einem weiteren Vorschlag der Erfindung kann vorgesehen sein, dass die Ablasseinrichtung ein Sieb aufweist, das am Rande einer Öffnung im Boden der Überlaufrinne festgelegt ist. Zweckmäßigerweise entsprechen die Filtereigenschaften des Siebes denen desjenigen Filtertuches, das an der Filtertrommel eingesetzt ist. Somit wird sichergestellt, dass die durch die Ablasseinrichtung hindurch in einen Behälter mit gereinigter Flüssigkeit übertretende Kühlflüssigkeit den gleichen Reinheitsgrad hat wie die dort befindliche Flüssigkeit, Verschmutzungen also vermieden werden.

Gemäß einem weiteren Vorschlag der Erfindung kann vorgesehen sein, dass über dem Sieb eine betretbare, die Anströmung des Siebes freilassende Überdeckung vorgesehen ist. Damit wird die Überlaufrinne begehbar und die Siebe werden vor zu hohen Belastungen geschützt.

Schließlich kann gemäß einem weiteren Vorschlag der Erfindung vorgesehen sein, dass der maximale Durchtrittsvolumenstrom der Ablasseinrichtung(en) kleiner oder gleich ist dem maximalen Überlaufvolumenstrom.

Nachfolgend wird eine Ausführungsform der erfindungsgemäßen Vorrichtung anhand von Zeichnungen beschrieben.

Es zeigt:
- Fig. 1:: eine Seitenansicht einer erfindungsgemäßen Vorrichtung mit Überlaufrinne,
- Fig. 2:: eine Draufsicht auf die Überlaufrinne nach Fig. 1,
- Fig. 2a:: eine Draufsicht auf die Ablassvorrichtung,
- Fig. 2b:: einen Schnitt durch die Ablassvorrichtung nach Fig. 2a,
- Fig. 3:: einen Schnitt nach der Linie A/A in Fig. 2 und
- Fig. 4:: einen Schnitt nach der Linie B/B in Fig. 2.
- Fig. 5:: Detailansicht der Verbindung zwischen Aufnahmetank und Überlaufrinne

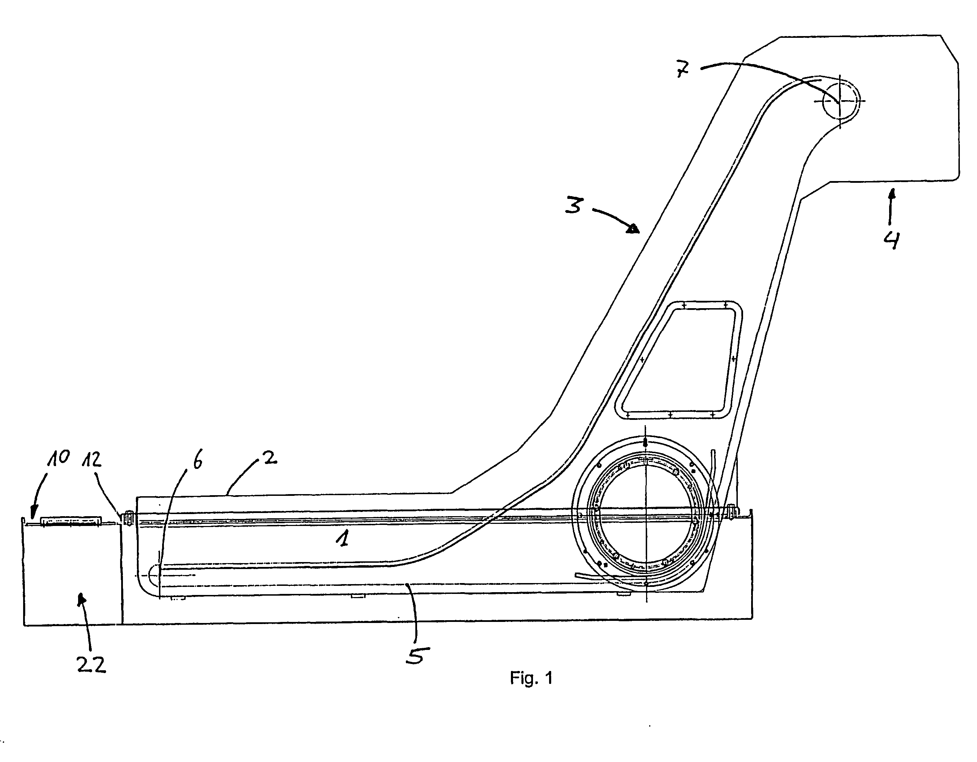

Fig. 1 zeigt die Seitenansicht einer Ausführungsform der erfindungsgemäßen Vorrichtung mit einem Aufnahmetank 1, der nach oben offen ist und an Werkzeugmaschinen anfallende Späne und Kühlflüssigkeit aufnimmt. Dieser Aufnahmetank 1 hat eine Überlaufkante 2. An den Aufnahmetank 1 schließt sich ein ansteigender Führungsabschnitt 3 an, der in einen erhöhten Abgabeabschnitt 4 übergeht. Ein an seinen beiden Seiten über Rollen geführter Schamierbandförderer 5 ist hier als Transportelement für den Abtransport der in der Kühlflüssigkeit vorhandenen Späne vorgesehen. Dieser ist um ein unteres Umlenkelement 6 am Ende des Aufnahmetanks 1 geführt und läuft im Bereich des Abgabeabschnitts 4 um ein oberes Umlenkelement 7, das mit einem nicht dargestellten Antrieb gekoppelt ist.

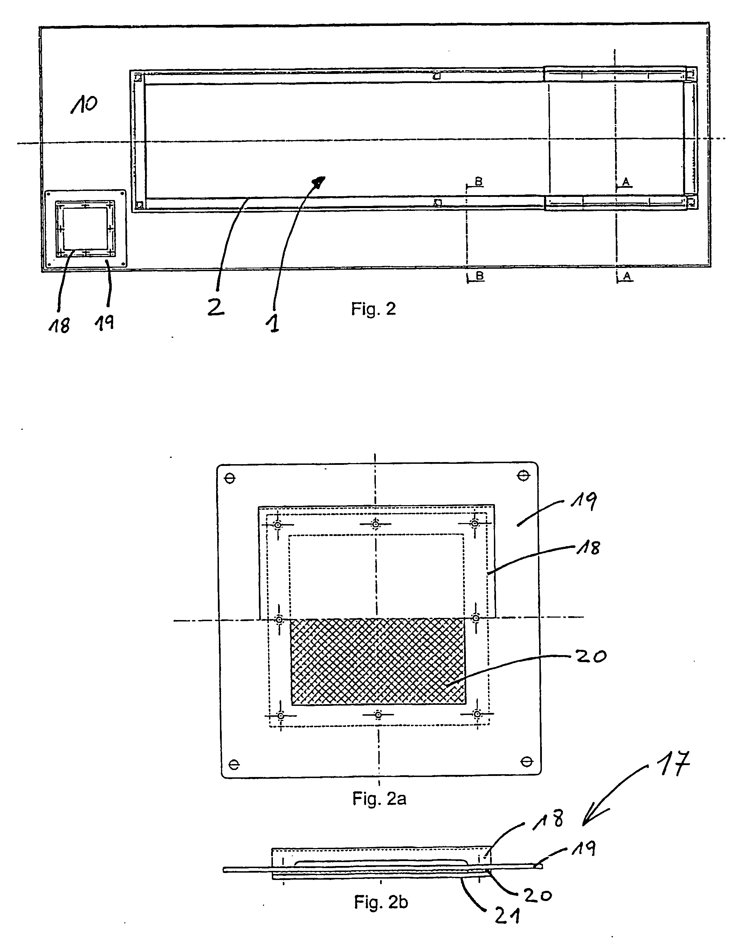

In Fig. 2 ist die Draufsicht der Vorrichtung schematisch dargestellt, wobei eine Überlaufrinne 10 die gesamte Vorrichtung umgibt. Unterhalb der Überlaufrinne 10 können sich Tanks 22 für die Aufnahme von gereinigter Kühlflüssigkeit befinden.

Fig. 2a zeigt eine Aufsicht auf eine Ablasseinrichtung 17, die in eine Öffnung in der Überlaufrinne 10 eingesetzt wird. Die Ablasseinrichtung 17 besteht aus einer Halteplatte 19, an der das Sieb 20 und die Überdeckung 18 befestigt sind. Dabei entsprechen die Filtereigenschaften des Siebes 20 denen der Filtertrommel. Tritt nun ungefilterte Kühlflüssigkeit über die Überlaufkante 2 in die Überlaufrinne 10, so wird diese die Ablasseinrichtung 17 erreichen. Die Kühlflüssigkeit wird dann durch das Sieb 20 in die unter der Überlaufrinne 10 befindlichen Tanks 22 ablaufen, wobei die in der Kühlflüssigkeit noch enthaltenen Späne von dem Sieb 20 zurückgehalten werden, so dass nur gefilterte Kühlflüssigkeit in die unter der Überlaufrinne 10 befindlichen Tanks 22 gelangt. Die Überdeckung 18 besitzt an ihren Seiten jeweils eine Aussparung, durch die die ungefilterte Kühlflüssigkeit zu dem Sieb 20 fließen kann und dient als Trittschutz.

Figur 2b zeigt einen Schnitt durch die Ablasseinrichtung 17. Diese besteht aus der Halteplatte 19, auf deren Oberseite die Überdeckung 18 angebracht ist. Auf der Unterseite der Halteplatte 19 wird das Sieb 20 mit Hilfe des Siebbefestigungsrahmens 21 gehalten.

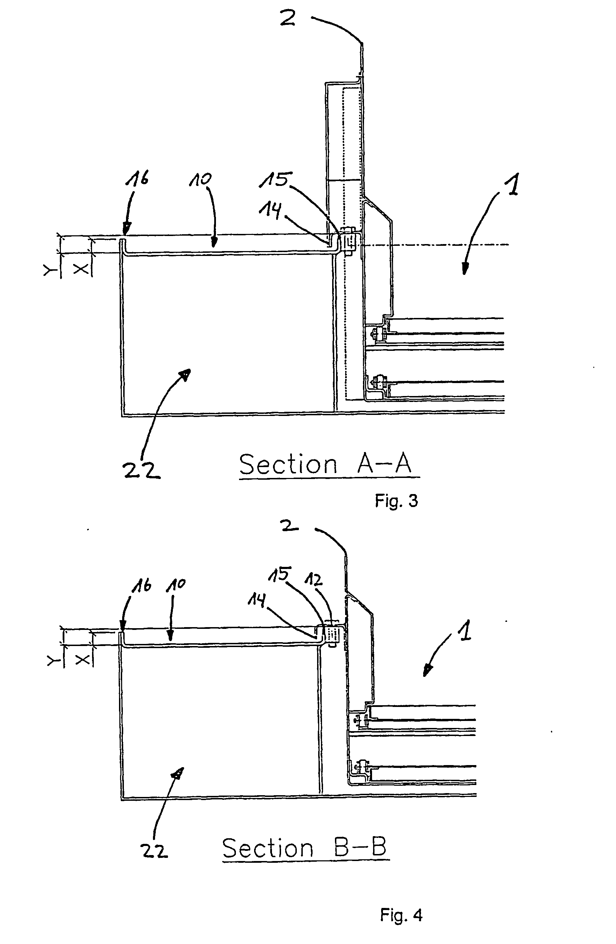

Figur 3 zeigt einen Schnitt durch die Vorrichtung entlang der Linie A - A, die durch den ansteigenden Führungsabschnitt 3 der Vorrichtung verläuft. In diesem Abschnitt wird ein Überlaufen des Aufnahmetanks 1 nicht stattfinden. Gleichwohl hat es sich als vorteilhaft erwiesen, die Überlaufrinne 10 um die gesamte Vorrichtung herumzuführen.

Fig. 4 zeigt einen Schnitt durch die Vorrichtung entlang der Linie B - B, die durch den Aufnahmetank 1 verläuft. Dabei ist die gezeigte obere Kante 2 des Aufnahmebehälters 1 die zugleich die niedrigste Kante des Aufnahmetanks1. Wenn es also zu einem Überlauf von noch nicht gereinigter Kühlflüssigkeit kommt, so wird sie in diesem Bereich auftreten. Überlaufende Kühlflüssigkeit wird dann an der Außenseite des Aufnahmetanks 1 und über das umgekehrt U-förmige Profil in die Überlaufrinne 10 fließen. Anschließend wird sie über die Ablasseinrichtung 17 in den Tank 22 abfließen, wobei enthaltene Späne durch das Sieb 20 zurückgehalten werden. Für den Fall, dass die Menge der überlaufenden Kühlflüssigkeit größer ist als die durch die Ablasseinrichtung abfließende, so wird sich die Kühlflüssigkeit zunächst in der Überlaufrinne 10 sammeln und schließlich über den äußeren Schenkel 16 der Überlaufrinne 10, der eine geringere Höhe als der innere Schenkel 15 der Überlaufrinne 10 aufweist, abfließen, so dass damit sichergestellt ist, dass ungefilterte Kühlflüssigkeit keinesfalls in den Tank 22 mit gefilterter Kühlflüssigkeit gelangt.

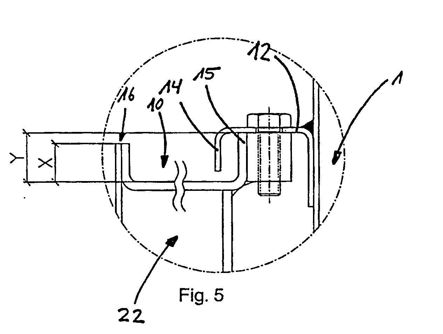

Fig. 5 zeigt eine Detailansicht der Verbindung zwischen dem Aufnahmetank 1 und der Überlaufrinne 10. An die Außenwand des Aufnahmetanks 1 sind Bügel 12 angeschweißt. Im Ausführungsbeispiel sind die Bügel ein umgekehrt U-förmiges Profil, dessen einer Schenkel an die Außenwand des Aufnahmetanks 1 angeschweißt ist und dessen äußerer Schenkel 14 in die Überlaufrinne 10 eingreift. Der Aufnahmetank 1 ist über das daran angeschweißte umgekehrt U-förmige Profil mittels einer Schraubverbindung mit der Überlaufrinne 10 verbunden. Die Überlaufrinne hat einen der Vorrichtung zugewandten inneren Schenkel 15 sowie einen der Vorrichtung abgewandten äußeren Schenkel 16, wobei die Höhe x des äußeren Schenkels 16 kleiner gewählt ist als die Höhe y des inneren Schenkels 15. Dies hat zur Folge, dass bei gefüllter Überlaufrinne 10 nach außen hin bereits ein Überlaufen erfolgt bevor an dem innenliegenden Schenkel 15 der Überlaufrinne 10 bereits der hier mögliche Füllstand erreicht ist. Somit ist eine Abdichtung zwischen dem äußeren Schenkel 14 des umgekehrt U-förmigen Profils 12 und dem inneren Schenkel 15 der U-förmigen Überlaufrinne 10 nicht erforderlich.

### Bezugszeichenliste

- 1: Aufnahmetank
- 2: Überlaufkante
- 3: Führungsabschnitt
- 4: Abgabeabschnitt
- 5: Schamierband
- 6: unteres Umlenkelement
- 7: oberes Umlenkelement
- 8: -
- 9: -
- 10: Überlaufrinne
- 11: -
- 12: umgekehrtes U-Profil
- 13: -
- 14: äußerer Schenkel des umgekehrten U-Profils
- 15: innerer Schenkel der Überlaufrinne
- 16: äußerer Schenkel der Überlaufrinne
- 17: Ablasseinrichtung
- 18: Überdeckung
- 19: Halteplatte
- 20: Sieb
- 21: Siebbefestigungsrahmen
- 22: Tank für gefilterte Kühlflüssigkeit

## Patentansprüche

1. Vorrichtung zur Aufnahme und Trennung von an Werkzeugmaschinen anfallenden Spänen und Kühlflüssigkeit, wobei die Kühlflüssigkeit zum Wiedereinsatz zurückgeführt und die Späne abgeführt werden,
mit einem Aufnahmetank (1) zur Aufnahme der Späne und der Kühlflüssigkeit, einem sich an den Aufnahmetank (1) anschließenden ansteigenden Führungsabschnitt (3),
einem sich an den Führungsabschnitt (3) anschließenden erhöhten Abgabeabschnitt (4),
einem kettenartigen geschlossenen Transportelement, welches zumindest in dem die Späne und die Kühlflüssigkeit aufnehmenden Bereich sowie in dem Abgabeabschnitt (4) über Umlenkelemente (6, 7) geführt ist, von denen mindestens eines mit einem Drehantrieb gekoppelt ist, und
einer drehbar gelagerten Filtertrommel, welche mit dem Transportelement in Antriebsverbindung steht,
**dadurch gekennzeichnet,**
**dass** außenseitig an der Wand des Aufnahmetanks (1) Bügel (12) dichtend festgelegt sind, die an ihren vorstehenden Enden abwärts gerichtet in eine Überlaufrinne (10) hineinreichen,
**dass** die Überlaufrinne (10) auf einem Niveau unterhalb der Oberkante (2) des Aufnahmetanks (1) um die Vorrichtung herum geführt und an den Bügeln (12) lösbar gehalten ist,
**dass** die Überlaufrinne (10) darunter befindliche Tanks (22) mit gefilterter Kühlflüssigkeit dichtend abdeckt,
**dass** die dem Aufnahmetank (1) benachbarte Innenkante (15) der Überlaufrinne (10) auf einem höheren Niveau liegt als die vom Aufnahmetank (1) entfernt liegende Außenkante (16) der Überlaufrinne (10), und
**dass** im Bodenbereich der Überlaufrinne (10) mindestens eine Ablasseinrichtung (17) vorgesehen ist.

2. Vorrichtung nach Anspruch 1, **dadurch gekennzeichnet,**
**dass** die Überlaufrinne (10) U-förmig ausgebildet ist.

3. Vorrichtung nach Anspruch 1 oder 2, **dadurch gekennzeichnet,**
**dass** die Ablasseinrichtung (17) ein Sieb (20) aufweist, das am Rande einer Öffnung im Boden der Überlaufrinne (10) festgelegt ist.

4. Vorrichtung nach Anspruch 3, **dadurch gekennzeichnet,**
**dass** die Filtereigenschaften des Siebes (20) denen desjenigen Filtertuches entsprechen, das an der Filtertrommel eingesetzt ist.

5. Vorrichtung nach Anspruch 3 oder 4, **dadurch gekennzeichnet,**
**dass** über dem Sieb (20) eine betretbare, die Anströmung des Siebes (20) freilassende Überdeckung (18) vorgesehen ist.

6. Vorrichtung nach einem der Ansprüche 1 - 5 , **dadurch gekennzeichnet,**
**dass** der maximale Durchtrittsvolumenstrom der Ablasseinrichtung(en) (17) kleiner oder gleich ist dem maximalen Überlaufvolumenstrom.

## Claims

1. A device for receiving and separating chips and coolant fluid collecting on machine tools, the coolant being returned for reuse and the chips being removed,
having a receiving tank (1) to receive the chips and coolant,
a rising guide section (3) adjoining the receiving tank (1),
an elevated discharge section (4) adjoining the guide section (3),
a chain-like closed transport element, which, at least in the region receiving the chips and the coolant and in the discharge section, is guided over deflection elements (6, 7), at least one of which is coupled to a rotary drive, and
a rotatably mounted filter drum, which is in drive connection with the transport element,
**characterised in that**
holders (12), whose projecting ends, which are directed downward, extend into an overflow channel (10), are sealingly attached externally to the wall of the receiving tank (1),
that the overflow channel (10) is guided around the device at a level below the upper edge (2) of the receiving tank (1) and is removably held on the holders (12),
that the overflow channel (10) sealingly covers the tanks (22) located beneath it having filtered coolant;
that the inner edge (15) of the overflow channel (10) neighboring the receiving tank (1) lies at a higher level than the outer edge (16) of the overflow channel (10), which is further away from the receiving tank (1), and
that at least one outlet device (17) is provided in the bottom region of the overflow channel (10).

2. The device according to Claim 1, **characterised in that** the overflow channel (10) is implemented as U-shaped.

3. The device according to Claim 1 or 2, **characterised in that** the outlet device (17) may have a screen (20) which is fixed on the edge of an opening in the bottom of the overflow channel (10).

4. The device according to Claim 3, **characterised in that** the filter properties of the screen expediently correspond to those of the filter cloth which is used in the filter drum (12).

5. The device according to Claim 3 or 4, **characterised in that** a cover (18) is provided over the screen (20) which leaves the flow to the screen (20) free and which may be stepped on.

6. The device according to one of Claims 1 - 5, **characterised in that** the maximum pass-through volume flow of the outlet device(s) (17) may be smaller than or equal to the maximum overflow volume flow.

## Revendications

1. Dispositif de recueil et de séparation de copeaux et de liquide de refroidissement tombant sur des machines-outils, le liquide de refroidissement étant recyclé pour être réutilisé et les copeaux étant évacués,
avec une cuve de recueil (1) qui recueille les copeaux et le liquide de refroidissement,
une partie de guidage (3) ascendante qui se raccorde à la cuve de recueil (1),
une partie surélevée de déversement (4) qui se raccorde à la partie de guidage (3),
un élément de transport en chaîne sans fin qui est guidé par des éléments d'inversion (6, 7) au moins dans la zone qui reprend les copeaux et le liquide de refroidissement ainsi que dans la partie de déversement (4), au moins l'un des éléments d'inversion étant accouplé à un entraînement en rotation et
un tambour de filtre monté à rotation et en liaison d'entraînement avec l'élément de transport,
**caractérisé en ce que**
des étriers (12) dont les extrémités en saillie sont orientées vers le bas et pénètrent dans une rigole de débordement (10) sont fixés de manière étanche sur le côté extérieur de la paroi de la cuve de recueil (1),
**en ce que** la rigole de débordement (10) est guidée autour du dispositif à un niveau en dessous du bord supérieur (2) de la cuve de recueil (1) et est maintenue de manière libérable sur les étriers (12),
**en ce que** la rigole de débordement (10) recouvre de manière étanche des cuves (22) situées en dessous d'elle et qui contiennent de liquide de refroidissement filtré,
**en ce que** le bord intérieur (15) de la rigole de débordement (10) voisin de la cuve de recueil (1) est situé à un niveau plus haut que le bord extérieur (16) de la rigole de débordement (10) situé à distance de la cuve de recueil (1) et
**en ce qu'**au moins un dispositif d'évacuation (17) est prévu dans la zone du fond de la rigole de débordement (10).

2. Dispositif selon la revendication 1, **caractérisé en ce que** la rigole de débordement (10) est configurée en forme de U.

3. Dispositif selon la revendication 1 ou 2, **caractérisé en ce que** le dispositif d'évacuation (17) présente un tamis (20) qui est fixé sur le bord d'une ouverture ménagée dans le fond de la rigole de débordement (10).

4. Dispositif selon la revendication 3, **caractérisé en ce que** les propriétés de filtration du tamis (20) correspondant à celles du tissu de filtre qui est utilisé sur le tambour de filtre.

5. Dispositif selon la revendication 3 ou 4, **caractérisé en ce qu'**un recouvrement (18) sur lequel on peut marcher et qui laisse passer l'écoulement vers le tamis (20) est prévu au-dessus du tamis (20).

6. Dispositif selon l'une quelconque des revendications 1 à 5, **caractérisé en ce que** le débit volumique maximum de passage du ou des dispositifs d'évacuation (17) est inférieur ou égal au débit volumique maximum de débordement.
